# EUROPEAN PATENT APPLICATION

(11) **EP 1 580 955 A2**
(43) Date of publication of application: **28.09.2005**
(21) Application number: 04030736.5
(22) Date of filing: 23.12.2004
(51) Int. Cl.: H04L 29/06

(54) **System, method and program product for checking disclosure of information on network**

(30) Priority: 24.03.2004 JP 2004087528
(71) Applicant: Hitachi, Ltd., Tokyo 100-8280 (JP)
(72) Inventor: Moritsu, Toshiyuki Hitachi, Ltd., 1-chome Chiyoda-ku Tokyo 100-8220 (JP); Shimamura, Atsushi Hitachi, Ltd., 1-chome Chiyoda-ku Tokyo 100-8220 (JP); Takeuchi, Kunihito Hitachi, Ltd., 1-chome Chiyoda-ku Tokyo 100-8220 (JP)
(74) Representative: Strehl Schübel-Hopf & Partner

(57) **Abstract**

A system for checking disclosure of information on a network, the system includes: a storage device which stores a record including a public location of the information on the network, disclosure start time and disclosure termination time of the information on the network, and disclosed contents of the information on the network; a communication control unit connected to the network, which receives a message including the public location of the pertinent information from the network when the information has been altered; and a processing device which makes access to the public location of the information on the network based on the public location included in the message when the communication control unit has received the message. The communication control unit receives disclosed contents of the pertinent information from the network after altered in accordance with the access by the processing device. And the processing device stores altered time of the pertinent information in a record for the pertinent information before altered in the storage device as disclosure termination time of the pertinent information before altered, and stores altered time of the pertinent information in a record for the information after altered in the storage device as disclosure start time of the pertinent information after altered along with disclosed contents of the information after altered.

## Description

### Background

The invention relates to a technique for checking the fact concerning disclosure of information on networks, particularly to a technique for certifying truth of contents of public information, a disclosed time period, or the like in system such as electronic publication or announcement systems and electronic commerce systems.

As for systems such as electronic publication or announcement systems and electronic commerce systems in which readers are affected by whether there is the fact concerning that information has been put on networks or not, it is expected that a need to attest what information has been posted on networks from when to when will be increased. For example, electronic publication, which entities such as government offices, corporations, persons, and so on make to announce bidding, financial statement, share split-up, and inheritance to the public by electromagnetic methods, requires being made accessible to the public for a fixed time period. Therefore, it is desirable that there is a trusted third party attesting what contents of electronic publication have been made public on networks from when to when.

On the other hand, it is also desirable in view of consumer protection that a trusted third party can certify contents of electronic information and disclosed time thereof disclosed on networks for electronic commerce systems such as Internet shopping systems offering items and services on the Internet, and Internet advertising systems disseminating advertisement on the Internet.

In the meantime, as techniques certifying that electronic information has been released on networks, US 2001/002472 (JP-A-2001-154989) describes a certification method that a certification authority downloads electronic information to be a target for certification later at a plurality of timing within a specified time period, and stores the electronic information and an electronic certificate (a hash value and a time stamp for the electronic information). Japanese patent Laid-open Publication No. 2002-342146 describes an inspection method for checking whether rewrite contents in Web pages to be inspected by an inspection device contain improper keywords previously registered and thus inspects generation of falsification in the Web pages to be inspected. Japanese patent Laid-open Publication No. 2002-207660 describes an inspection method in which an inspection server collects inspection target contents on an inspection target computer at a plurality of timing beforehand, if there is no difference between the inspection target contents and reference contents (for example, the inspection target contents first collected from the inspection target computer), the inspection server stores collected time, while if there is difference between them, the inspection server stores the inspection target contents and the collected time.

Meanwhile, in the case where electronic publication is made by putting on a Web page used for electronic publication during a time period defined in accordance with contents of publication data, the contents of the publication may not been published on the Web page for less than 24 hours in total. In this case, when a company learns that the contents of the publication was not made and then promptly publishes that event, the fact that the publication was not made may not affect the force of publication.

To confirm whether the unpublished time for electronic publication exceeds 24 hours by any one of the methods described above, a certification authority needs to collect all the electronic publication to be targets for inspection for each period shorter than 24 hours. On this account, when electronic publication to be a target for certification is increased, traffic may increase.

On the other hand, when public information of entities such corporations in electronic commerce is certified by any one of the methods described above, a certification authority also needs to download the public information of entities such as corporations at considerable frequencies. The public information of entities such as corporations often contains multimedia data (images, moving picture, and sounds) with great data size. Therefore, when public information to be a target for certification is increased, traffic may increase as similar to the case of certifying electronic publication.

### Summary

The invention is a system for checking disclosure of information on a network (for example, a certification authority system), the system including:
storing a record including a public location (such as address information) of the information on the network, disclosure start time and disclosure termination time of the information on the network, and disclosed contents of the information on the network in a storage device;
receiving a message including a public location of the pertinent information from the network when the information has been altered;
making access to the public location of the information on the network based on the public location included in the message;
receiving disclosed contents of the pertinent information after altered from the network in accordance with the access; and
storing altered time of the pertinent information in a record for the pertinent information before altered in the storage device as disclosure termination time of the pertinent information before altered, and storing the altered time of the pertinent information in a record for the information after altered in the storage device as disclosure start time of the pertinent information after altered along with disclosed contents of the information after altered.

On the other hand, the invention is a system for disclosing information on a network (an information sending system), the system including:
disclosing contents of the information on the network;
inspecting whether disclosed contents of the information in an area have been altered;
creating a message including a public location that identifies an area for the pertinent information in a storage device when the disclosed contents of the information have been altered;
sending the message to the network;
receiving an access request for the public location included in the message through the network; and
reading the information out of the area specified by the public location in the storage device, and sending the information read out to the network when the access request has been received.

The invention is a system for checking disclosure of information on a network, the system including:
storing a record including a public location of the information on the network, disclosure start time and disclosure termination time of the information on the network, and disclosed contents of the information on the network in a storage device;
receiving a message including disclosed contents of the pertinent information after altered from the network when the information has been altered; and
storing altered time of the pertinent information in a record for the pertinent information before altered in the storage device as disclosure termination time of the pertinent information before altered, and storing the altered time of the pertinent information in a record for the information after altered in the storage device as start disclosure time of the pertinent information after altered along with disclosed contents of the information after altered.

On the other hand, the invention is a system for disclosing information on a network, the system including:
disclosing contents of the information on the network;
inspecting whether disclosed contents of the information in an area have been altered;
creating a message including disclosed contents of the pertinent information after altered when the disclosed contents of the information have been altered; and
sending the message to the network.

According to the invention, network traffic can be reduced.

### Description of the Drawings

Fig. 1 is a diagram illustrating the overall configuration of a network system according to the invention;
Fig. 2 shows an exemplary hardware configuration of an information sending system, a browser system, and a certification authority system according to the invention;
Fig. 3 is a conceptual diagram illustrating the data structure of a public information archive according to the invention;
Fig. 4 is a conceptual diagram illustrating the data structure of an inspection target specification data table according to the invention;
Figs. 5 are flow charts illustrating an inspection target setting request process executed by an inspection target setting request program on the information sending system, and an inspection target setting process executed by an inspection target setting program on the certification authority system according to the invention;
Figs. 6 are flow charts illustrating an alteration inspection process executed by an alteration inspection program on the information sending system, an archiving process executed by an archiving program on the certification authority system, and a Web server process executed by a Web server program on the information sending system according to the invention;
Figs. 7 are flow charts illustrating a random access process executed by a random access program on the certification authority system, and a Web server process executed by a Web server program on the information sending system according to the invention; and
Figs. 8 are flow charts illustrating a content-certification request process executed by a content-certification send request program, and a content-certification sending process executed by a content-certification sending program according to the invention.

### Description of the Embodiments

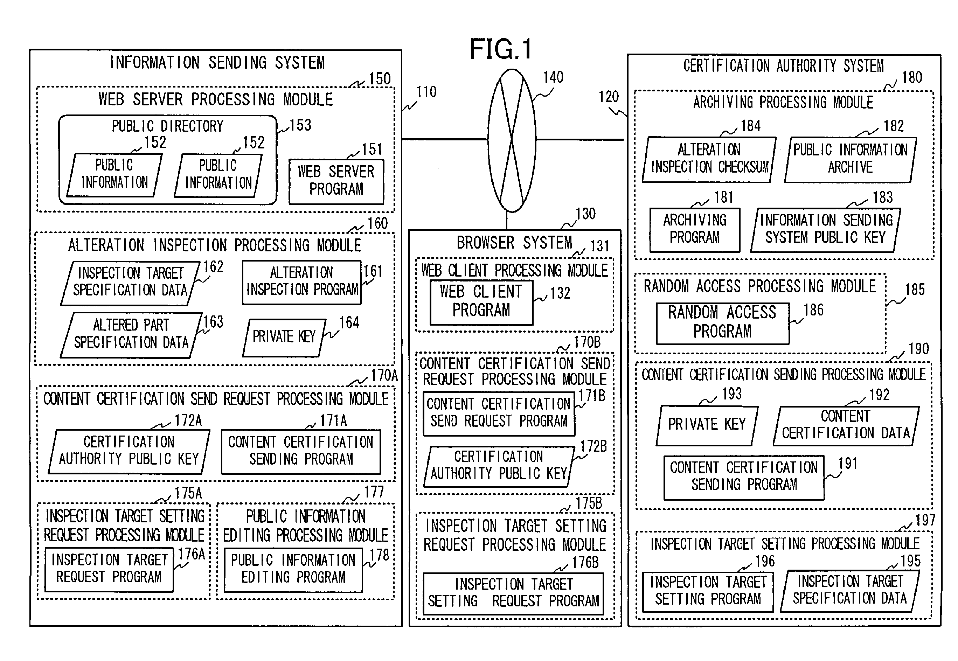

As shown in Fig. 1, a network system of an embodiment has a WWW (World Wide Web) server (information sending system) 110 which sends electronic information (hereinafter, public information) 153 intended for disclosure to third parties (general public or specific individuals, and persons belonging to particular groups), a certification authority system 120 which certifies the fact concerning public information 152 on the information sending system 110, a WWW client (browser system) 130 which makes the public information 152 in the information sending system 110 browseable, and a network 140 such as the Internet which connects these systems 110, 120, and 130 each other. Here, any systems, whatever the operational purposes, are applicable to the information sending system 110 , provided that they return the public information 152 in response to a request from the browser system 130. For example, electronic publication or announcement systems, electronic commerce systems (Internet shopping systems and Internet advertising systems), and systems of organizations (for example, Internet services providers) that provide information sending services on the network 140 for organizations such as corporations or individuals may correspond to the information sending system 110.

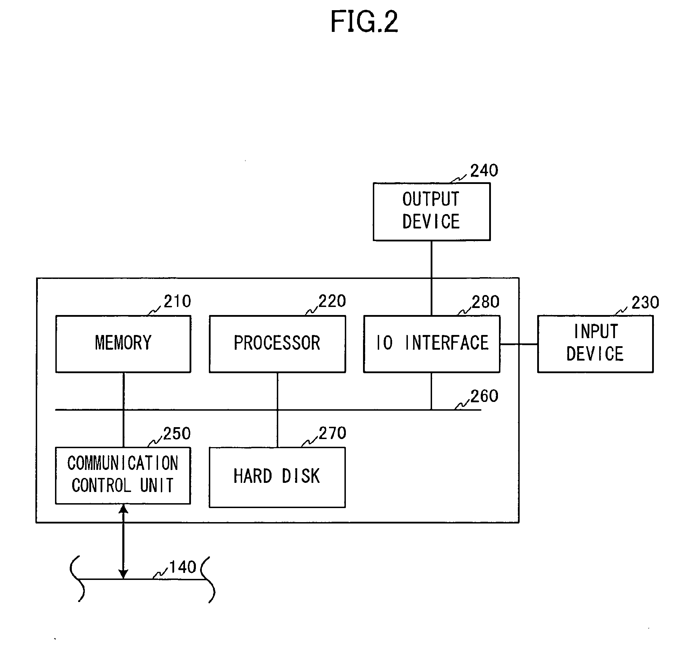

In the meantime, the information sending system 110, the browser system 130, and the certification authority system 120 can be implemented by general computer systems that can execute software in accordance with external instructions. More specifically, as shown in Fig. 2, this information processing device has hardware: a hard disk 270 which stores various software and data therein, a memory 210, a processor (such as MPU) 220 which executes software loaded on the memory 210 from the hard disk 270, a communication control unit (such as networks card) 250 which controls communications through the network 140, an input/output interface 280 to which external devices are connected, including an input device (such as mouse or keyboard) 230 which receives input from users and an output device(such as display) 240 which outputs presentation information to users, a bus 260 which connects them each other, and so on. The information sending system 110, the browser system 130, and the certification authority system implement the required functional configuration by the hardware configuration like this, software and data on the hard disk. More specifically, it is as follows.

A public directory 153 which is made public on the network 140 is provided on the hard disk of the information sending system 110. The public information (html document) 152, which is to be a target for certification by the certification authority system 120, is stored in the public directory 153 or therebelow. The public information 152 may be stored right in the public directory 153, or stored in the sudirectories within the public directory 153.

Furthermore, in the hard disk of the information sending system 110, the following data and the software are stored:
(1) a Web server program 151 which returns the public information 152 in response to a request from a Web client program, the information is indicated by a URL (Uniform Resource Locator) included in that request;
(2) a public information editing program 178 which executes an editing process (such as newly create, update, and delete) for the public information 152 in accordance with instructions by users;
(3) an inspection target specification data table 162 in which URLs of inspection target directories are registered;
(4) an inspection target setting request program 176A which sends a registration request including an address (URL) indicating the location of a directory on the network 140 to the certification authority system 120 when a user of the browser system 130 or the information sending system 110 specifies the public directory 153 or its subdirectory as a new inspection target directory, and registers the returned URL in an inspection target specification data table 162;
(5) an alteration inspection program 161 which inspects the inspection target directory and therebelow indicated by the URL registered in the inspection target specification data table 162, and sends the URL of the inspection target directory having been altered to the certification authority system 120 as an altered part specification data file 163;
(6) a content-certification sending program 171A which sends a send request for a content-certification information 192 added with a digital signature that certifies the contents of public information and the disclosure time period to the certification authority system 120 in accordance with an instruction by a user; and
(7) OS (Operating System).

In addition, in the hard disk of the information sending system 110, data used for processes described later beforehand are stored. For example, data are stores, such as a private key 164 which is used for creating a digital signature added to data (altered part specification data and checksums) to be sent to the certification authority system 120, and a certification authority public key 172A which is used for decoding the digital signature added to the received content-certification information.

With the software and data, and the hardware configuration described above, the information sending system 110 implements functional configuration modules to execute the processes described later, that is, a Web server processing module 150, an alteration inspection processing module 160, a content-certification send request processing module 170A, an inspection target setting request processing module 175A, and a public information editing processing module 177. Moreover, these individual functional configuration modules 150, 160, 170A, 175A, and 177 are implemented by executing the software having the same name in the software described above.

The hard disk of the certification authority system 120 is stored the following:
(1) a public information archive 182 which manages current and past public information to be a target for certification;
(2) an archiving program 181 which downloads the public information 152 from the inspection target directory indicated by the URL included in the altered part specification data 163 from the authorized alteration inspection program 161, and stores it in the public information archive 182;
(3) an inspection target specification data table 195 in which the URL of the inspection target directory is registered;
(4) an inspection target setting program 196 which registers the URL in the inspection target specification data table 195 in response to a request from the network 140, the URL is included in that request;
(5) a random access program 186 which executes polling for the information sending system 110 at fixed intervals, compares public information randomly selected from the inspection target directory and therebelow registered in the inspection target specification data table 195 with information stored in the public information archive 182, and thus conducts spot checks whether the alteration inspection program 161 operates properly on the information sending system 110;
(6) a content-certification sending program 191 which creates content-certification information added with a digital signature in accordance with a request from the network 140, and returns it to a request source; and
(7) OS.

In addition, the hard disk of the certification authority system 120 stores data used for the processes described later beforehand. For example, it stores the following beforehand: an information sending system public key 183 which is used for decoding the digital signature added to received data (altered part specification data, and a checksum from the information sending system), an alteration inspection checksum 184 which is compared with the checksum obtained by encoding the digital signature, and a private key 193 which is used for creating a digital signature added to return data (content-certification information) to a source of the send request for content-certification information (the information sending system 110 or the browser system). Besides, for the alteration inspection function checksum 184, for example, the total value of byte rows (for instance, an execution image on the memory) when the alteration inspection program 161 is unachieved on the memory 210.

With the software and data, and the hardware configuration described above, the certification authority system 120 implements functional configuration modules to execute the processes described later, that is, an archiving processing module 180, a random access processing module 185, a content-certification sending processing module 190, an inspection target setting processing module 195, and an inspection target setting processing module 197. Furthermore, these individual functional configuration modules 180, 185, 190, 195, and 197 are implemented by executing the software having the same name in the software described above.

The hard disk of the browser system 130 is installed with the following:
(1) a Web client program 132 which sends a send request including the URL of public information to a Web server program, formats the return data (public information) therefrom as Web page and then outputs it to the output device;
(2) a content-certification send request program 171 B which is similar to the content-certification send request program 171 A of the information sending system 110;
(3) an inspection target setting request program 176B which is similar to the inspection target setting request program 176A of the information sending system 110; and
(4) OS.

It is acceptable that the software is installed from a storage medium, or installed through the network 140.

In addition, the hard disk of the browser system 130 stores data used for the process described later beforehand. For example, it stores a certification authority public key 172B beforehand, which is used as similar to the certification authority public key 172A stored in the hard disk of the information sending system 110.

With the software and data, and the hardware configuration described above, the browser system 130 implements functional configuration modules to execute the process described later, that is, a Web client processing module 131, a content-certification send request processing module 170B, and an inspection target setting request processing module 175B. Furthermore, these functional configuration modules 131, 170B, and 175B are implemented by executing the software having the same name in the software described above.

Moreover, in the embodiment, the information sending system 110, the browser system 130, and the certification authority system 120 exist on the network 140 one each, but it is acceptable that the individual systems 110, 120 and 130 exist on the network 140 in plural.

Besides, in the embodiment, the information sending system 110 is configured of a single information processing device, but it is acceptable that the information sending system is configured of multiple information processing devices that are connected by networks in an area such as a LAN (Local Area Network). For example, it is fine that the alteration inspection program 161 and the other programs 151, 171 A, 176A, and 178 are executed on separate information processing devices. When it is done, the alteration inspection program 161 is desirably executed on an information processing device having so-called tamper resistant properties, which responds to physical attack (unauthorized modification of hardware or stored software, and unauthorized extraction of stored data) against hardware such as HMS (Hardware Security Module). This intends to prevent unauthorized operations because the alteration inspection program 161 which inspects alteration of inspection target files is executed by an information processing device in the information sending system 110, that is, the information processing device in the system that sends public information.

In addition, it is acceptable that the software on the individual systems 110, 120, and 130 is installed from a storage medium, or installed through the network 140.

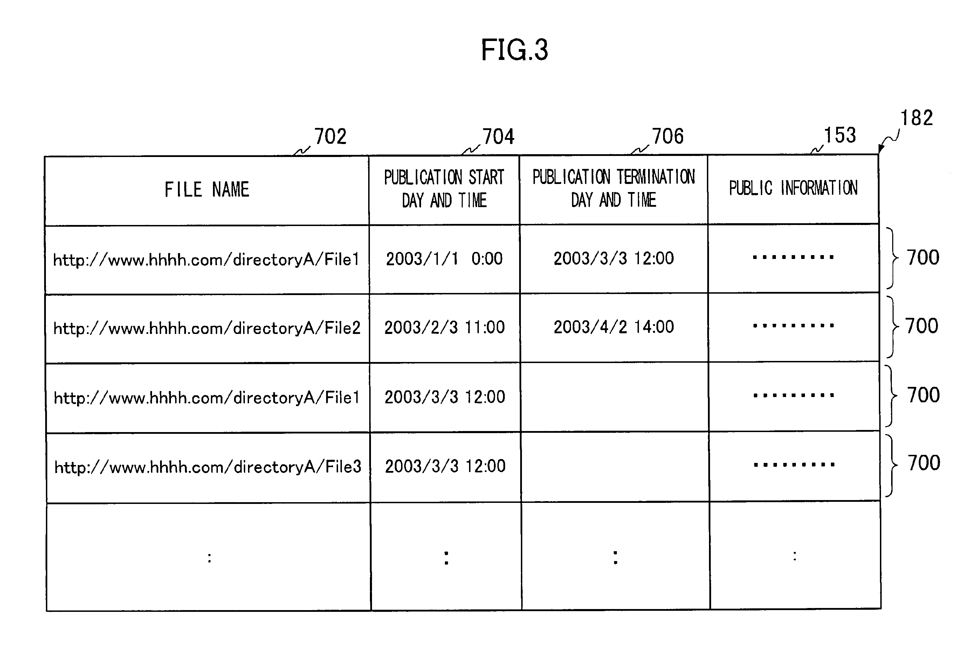

Next, the data structure of the public information archive 182 will be described by Fig. 3.

The public information archive 182 stores archive information 700 as content-certification information for public information at every time period during which public information to be a target for certification has been continuously disclosed on the network 140 with no alteration in the contents (hereinafter, it is referred to as a published time period). Each archive information stores a file name (URL) 702 of public information, publication start day and time information 704 which is defined as the start day and time of the published time period for public information, publication termination day and time information 706 which is defined as the termination day and time of the published time period for public information, and public information 152 which is downloaded from the information sending system within the published time period. In addition, in Fig. 3, the public information 152 for each archive information 700 is not shown in the drawing.

Here, the publication termination day and time information 706 is not registered in the archive information 700 for the public information (public information under published) currently disseminatable by the information process system 110 in accordance with a request from the WWW client program. When the contents of public information under published have been altered, the day and time that is considered to be the day and time when alteration has been generated (the publication finish time of the public information before altered) is registered as the publication termination day and time information 706 of the archive information including the file name of that public information. Furthermore, the archive information having that day and time (that is, the publication start time of the public information after altered) as the publication start day and time information 704 is additionally registered in the public information archive 182 as the archive information for that public information. More specifically, in the embodiment, for the public information before altered and the public information after disclosed, the separate items of archive information including the same file names are registered in the public information archive 182, as two items of the archive information 700 including file name 'http://www.hhhh.com/directoryA/file1' 702.

Next, the data structure of the inspection target specification data table 195 on the certification authority system 120 and the inspection target specification data table 162 on the information sending system 110 will be described.

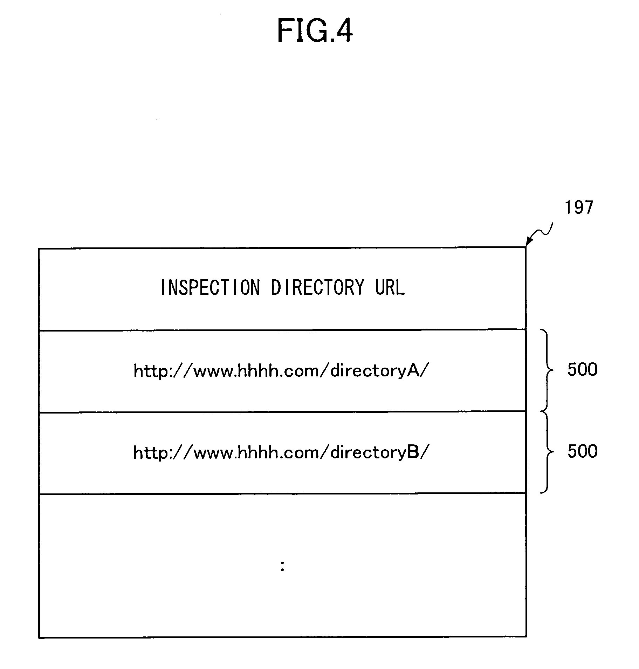

URLs of all the inspection target directories on the network 140 are registered in the inspection target specification data table 195 on the certification authority system 120. Fig. 4 shows an exemplary inspection target specification data table 195 in which multiple http (Hyper Text Transfer Protocol) addresses 500 are registered as URLs of the inspection target directories.

The inspection target specification data table 162 on the information sending system 110 has the same data structure as that of the inspection target specification data table 195 on the certification authority system 120, but only URLs of the inspection target directories on the information sending system 110 are registered.

Next, the processes executed on the network system shown in Fig. 1 will be described.

### A. Setting process for the inspection target directory

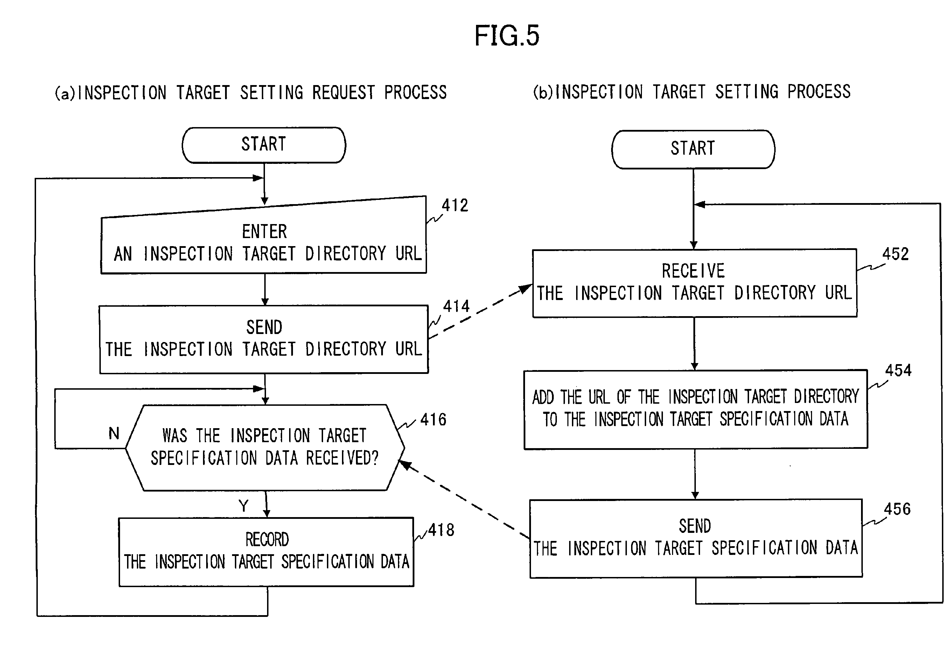

In Figs. 5, a flow chart (a) is illustrating an inspection target setting request process executed by the inspection target setting request processing module on the information sending system, and a flow (b) is chart illustrating an inspection target setting process executed by the inspection target setting processing module on the certification authority system in accordance with a request from the inspection target setting request program.

When a user activates the inspection target setting request program 176A on the information sending system 110 and enters a URL of a directory (public directory 153 or its subdirectories) where public information 152 to be a target for certification is placed (S412), the inspection target setting request program 176A sends a registration request including the URL to the certification authority system 120 (S414).

On the certification authority system 120, the inspection target setting program 196 receives the registration request (S452), and newly registers the URL included in the registration request in the inspection target specification data table 195 (S454). Thus, the inspection target directory specified by the user is newly registered in the inspection target specification data table 195 on the certification authority system 120. After that, the inspection target setting program 196 sends the registration request including the URL of the inspection target directory registered at this time to the information sending system 110 (S456).

On the information sending system 110, the inspection program 161 receives the registration request from the certification authority system 120 (S416), and registers the unregistered URL among one or more URLs included therein in the inspection target specification data table 195 (S418). Therefore, the inspection target directory specified by the user is also newly registered in the inspection target specification data table 195 on the information sending system 110.

In addition, here, the example is taken that the user uses the inspection target setting request program 176A on the information sending system 110 and specifies the inspection target directory. However, when the user uses the inspection target setting request program 176B on the browser system 130 and specifies a directory on the information sending system 110 as the inspection target directory, the inspection target setting request program 176A on the browser system 130 executes the same process.

### B. Archiving process for the public information

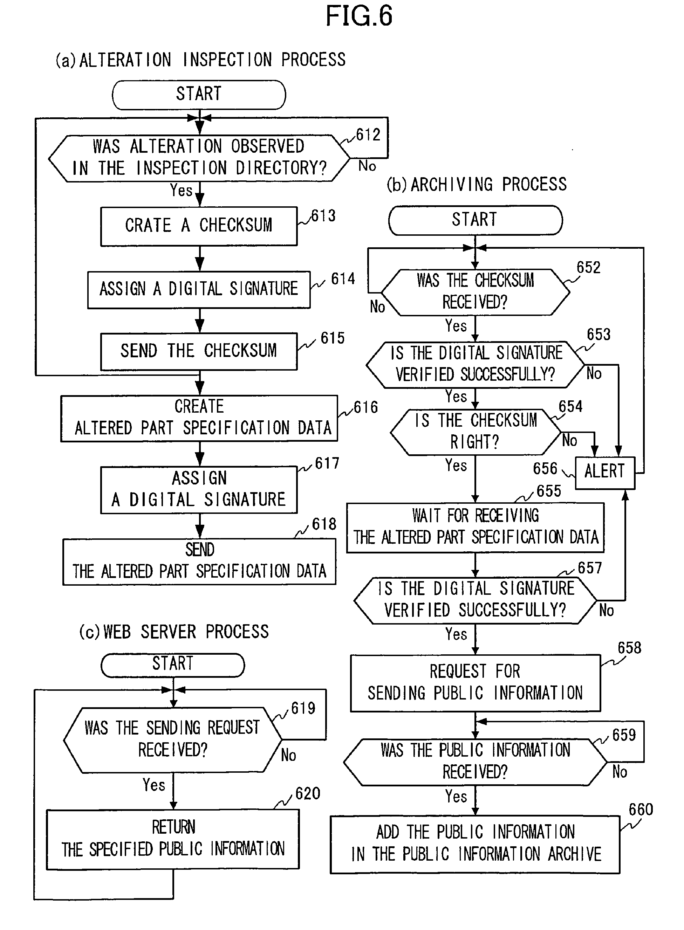

In Fig. 6, a flow chart (a) is illustrating an alteration inspection process executed by the alteration inspection processing module on the information sending system 110 at fixed intervals, a flow chart (b) is illustrating an archiving process executed by the archiving processing module on the certification authority system 120 based on the data from the alteration inspection program 161 on the information sending system 110, and 6C is a flow chart illustrating a Web server process executed by the Web server processing module on the information sending system 110 in accordance with a request from the archiving program 181 on the certification authority system 120.

On the information sending system 110, the alteration inspection program 161 converts each URL registered in the inspection target specification data table 162 to the directory name on the information sending system 110 separately, and checks whether the inspection target directories identified by the directory names have been altered (S612). An example is taken as the URL registered in the inspection target specification data table 162 shown in Fig. 5, the alteration inspection program 161 converts Web route directory 'http://www.hhhh.com/' in each URL to a real directory ('/www', here) on the information sending system 110, and acquires the update day and time of each public information in the inspection target directory and therebelow indicated by the obtained path at fixed intervals. Then, the alteration inspection program 161 compares the update day and time with the update day and time previously acquired at every time when acquiring the update day and time. Consequently, it determines that the inspection target directory has been altered when both are not matched with each other. Furthermore, here, the update day and time of public information is inspected in order to detect that the inspection target directory has been altered. However, it is acceptable that access to the public information in the inspection target directory and therebelow is inspected at the OS level.

For example, when the public information editing program 178 performs any one of new registration of public information in the inspection target directory and therebelow, update registration of the public information 152 in the inspection target directory and therebelow, and deletion of the public information 152 from the inspection target directory, in accordance with instructions by the user (a new registration instruction including specifying a new file name in which input information is to be stored, an update registration instruction including the existing file name the contents of which are updated by input information, and a deletion instruction including the existing file name to be a target for deletion), the alteration inspection program 161 determines that the inspection target directory has been altered.

When the inspection target directory has been altered, the alteration inspection program 161 calculates the total value (checksum) of the byte rows of the alteration inspection program 161 on the memory 210 as certification data showing its validity, encodes this checksum (or the hash value of the checksum) with the private key 164, and thus creates a digital signature as certification data showing the validity of a sender (S613). Moreover, the alteration inspection program 161 sends the checksum added with the digital signature to the certification authority system 120 (S614). Here, a digital signature for the checksum is created. When one-time challenging data (a random number) is sent from the certification authority system 120 to the information sending system 110, it is acceptable that the alteration inspection program 161 creates a digital signature for the checksum and the challenging data and sends the checksum added therewith to the certification authority system 120. Thus, spoofing that uses the data sent by the alteration inspection program 161 in the past can be prevented.

After that, on the certification authority system 120, when the archiving program 181 in the wait state for receiving the checksum added with the digital signature receives message data (S652), it executes a falsification check of the alteration inspection program 161 on the information sending system 110, and then it is in the wait state for receiving altered part specification data from the information sending system 110 in accordance with the result. More specifically, it is as follows.

The archiving program 181 decodes the digital signature in the message data with the public key 183 of the information sending system, and compares data obtained by decoding with plaintext in the message data (or the hash value of the plaintext) (S653).

Consequently, when both are not matched with each other (the digital signature fails to be verified), the message data is likely to have been forged or falsified. On this account, the archiving program 181 outputs an alert message from the output device (S656), and returns to the wait state for receiving message data from the information sending system 110 (S652).

On the other hand, when both are matched with each other (the digital signature is verified successfully), it means that the message data has been surely sent from the information sending system 110. Therefore, the archiving program 181 compares the plaintext of the message data with the alteration inspection checksum 184 (or the hash value of the alteration inspection checksum 184). Consequently, when both are not matched with each other, the alteration inspection program 161 is likely to have been falsified. On this account, the archiving program 181 outputs an alert message from the output device (S656), and returns to the wait state for receiving message data from the information sending system 110 (S652). Contrary to this, when both are matched with each other, the archiving program 181 is in the wait state for receiving altered part specification data from the information sending system 110 (S655).

In the meantime, while the falsification check of the alteration inspection program 161 is being conducted on the certification authority system 120, on the information sending system 110, the alteration inspection program 161 creates altered part specification data 163 which identifies the altered part in the inspection target directory (S616). Here, the URL of the file storing the public information where alteration has been detected at S612 is used for the altered part specification data 163. For example, when 'file1' under inspection target directory 'http://www.hhhh.com/directoryA' has been altered, the URL of 'file1', 'http://www.hhhh.com/directoryA/file1' is created as the altered part specification data 163.

Subsequently, the alteration inspection program 161 creates a digital signature for the altered part specification data 163 by the same process as that for the digital signature for the checksum (S617). Furthermore, the alteration inspection program 161 sends the altered part specification data 163 added with this digital signature to the certification authority system 120 (S618), and returns to the inspection state for the inspection target directory (S612).

Then, when the archiving program 181 in the wait state for receiving the altered part specification data receives message data in the certification authority system 120 (S655), it verifies the digital signature in the message data by the same process as the process at S653 (S657).

Consequently, when the digital signature fails to be verified, the message data is likely to have been forged or falsified. On this account, the archiving program 181 outputs an alert message from the output device (S656), and returns to the wait state for receiving message data from the information sending system 110 (S652).

On the other hand, when the digital signature is verified successfully, it means that the message data has been surely sent from the information sending system 110. Thus, the archiving program 181 sends a send request for a file indicated by the altered part specification data (URL) included in the message data to the information sending system 110 (S658).

When the Web server program 151 on the information sending system 110 receives this send request (S619), it searches for the public information 152 indicated by the URL from the public directory 153 and therebelow. Consequently, when the pertinent public information exists, the Web server program 151 returns that public information to the certification authority system 120. Contrary to this, when it does not exist, the Web server program 151 returns a message showing that to the certification authority system 120 (S620).

On the certification authority system 120, the archiving program 181 receives the return data from the Web server program 151 (S659), and executes the update process for the public information archive 182 based on the return data (S660). More specifically, it is as follows.

When the public information has not been returned from the Web server program 151 (when the public information has been deleted), the archiving program 181 searches the public information archive 182 for the archive information 700 in which the URL used at S658 is registered as the file name 702 and the publication termination day and time 706 is not registered, and registers the current day and time (timer output of the certification authority system) as the publication termination day and time 706 of the pertinent archive information.

On the other hand, when the public information has been returned from the Web server program 151, the archiving program 181 searches the public information archive 182 for the archive information 700 in which the URL (the URL used at S658) of the received public information is registered as the file name 702 and the publication termination day and time 706 is not registered. When the pertinent archive information 700 exists in the public information archive 182 (when the existing public information has been updated), the archiving program 181 registers the current day and time in the publication termination day and time 706 of the archive information 700, and further newly registers the archive information 700 including the current day and time (the publication start day and time 704), the received public information, and its URL (the file name 702) in the public information archive 182. On the other hand, when the pertinent archive information 700 does not exist in the public information archive 182 (new public information has been stored), the archiving program 181 newly registers the archive information 700 including the current day and time (the publication start day and time 704), the received public information, and its URL (the file name 702) in the public information archive 182.

When finishing the update process for the public information archive 182 in this manner, the archiving program 181 returns to the wait state for receiving the checksum (S652).

According to the process like this, the information sending system inspects whether alternation is observed in the public directory and therebelow, and the certification authority system downloads the altered public information from the information sending system only when the public information in the public directory and below has been altered. On this account, traffic is smaller than the case where the certification authority system downloads the entire public information from the information sending system at fixed intervals. Therefore, for example, even when public information to be a target for certification is increased, it is hard to cause a traffic increase.

Furthermore, the alteration inspection program 161 is executed on the system (information sending system) 110, which is the owner of public information to be an inspection target. However, the archiving program 181 executes the falsification check of the alteration inspection program 161 before receiving public information, and thus the reliability of the archive information stored in the public information archive 182 can be maintained. Moreover, in the embodiment, the falsification check of the alteration inspection program 161 is executed when alteration is detected in public information. However, it is acceptable that the falsification check of the alteration inspection program 161 is executed at timing irrelevant to detection timing of alteration in public information (for example, at fixed intervals).

In addition, in the embodiment, the information sending system 110 sends the altered part specification data 163 to the certification authority system 120, and then the certification authority system 120 downloads altered public information from the information sending system 110 based on the altered part specification data 163. However, it is acceptable that the alteration inspection program 161 on the information sending system 110 does not send the altered part specification data 163 and sends altered public information to the certification authority system 120. In this case, the alteration inspection program 161 on the information sending system 110 needs to send the URL of the public information 152 to the certification authority system 120 along with the altered public information 152. A record is made in the public information archive 182 as similar to the flow described above.

Furthermore, in the embodiment, the day and time (timer output of the certification authority system 120) of the certification authority system 120 is registered as the publication termination day and time 706 or the publication start day and time 704 of the archive information. However, it is acceptable that the certification authority system receives the day and time from a time server that provides the standard time when receiving public information and registers the day and time as the publication termination day and time 706 or the publication start day and time 704 of the archive information. Alternatively, it is fine that the information sending system 110 sends the alteration detected day and time of public information to the certification authority system 120 along with the public information and the certification authority system 120 registers the alteration detected day and time as the publication termination day and time 706 or the publication start day and time 704 of the archive information.

Moreover, in the embodiment, the alteration inspection program 161 on the information sending system 110 sends the altered part specification data 163 to the certification authority system 120. However, it is acceptable that the archiving program 181 on the certification authority system 120 downloads the altered part specification data 163 from the information sending system 110 at fixed intervals. In this case, the alteration inspection program 161 is to store the altered part specification data 163 in the public directory 153, and the Web server program 151 is to return the altered part specification data 163 in accordance with a request from the archiving program 181. When the information sending system 110 restricts types of data to be fed on the network 140 as security measures such as a firewall (for example, it restricts communications only on Webs), this form is desirable.

### C. Spot checks process for public information

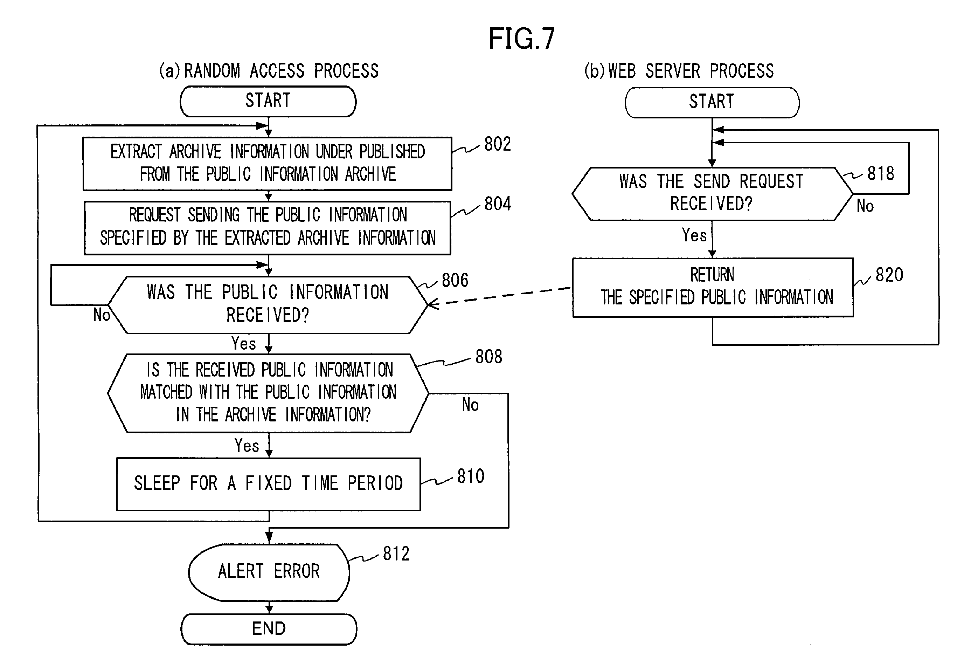

In Fig. 7, a flow chart (a) is illustrating a random access process executed by the random access processing module on the certification authority system 120, and a flow chart (b) is illustrating a Web server process executed by the Web server processing module on the information sending system 110 in accordance with a request from the random access program 186 on the certification authority system 120.

On the certification authority system 120, the random access program 186 randomly extracts archive information 700 (the archive information of the public information currently under published) in which the publication termination day and time 706 is not registered from the public information archive 182 (S802), and sends a send request for the public information having the file name 702 included in the archive information 700 to the information sending system 110 (S804). The Web server program 151 on the information sending system 110 receives the send request (S818), and returns the public information indicated by the file name included therein (S820).

On the certification authority system 120, the random access program 186 receives the public information returned from the Web server program 151 (S806), and compares the contents of public information with the contents of the public information 152 in the archive information 700 extracted at S802 (S808).

Consequently, when the contents are not matched with each other, the random access program 186 outputs an alert message showing that from the output device (S812). At this time, the random access program 186 downloads the public information indicated by the file name included in the archive information from the information sending system 110 for each archive information (the archive information in which the publication termination day and time is not registered) of the public information being disclosed. When there is difference in the contents between this public information and the public information included in the archive information, it is acceptable that the public information archive 182 is updated by the same process as the update process executed by the archiving program 181 when the existing public information has been updated. Thus, the current state of public information is reflected in the public information archive 182.

On the other hand, when the contents of both are the same, the random access program 186 sleeps (pauses) for a fixed time period (S810), and then again executes the process after S802. Therefore, checks of the public information under published and the public information in the public information archive are executed at fixed intervals.

According to the process like this, polling for the information sending system is executed at fixed intervals, and it is verified whether there is difference in the contents between the public information randomly selected from a group of the public information 152 under published by the information sending system and the public information 152 recorded in the public information archive 182. Accordingly, it can be confirmed whether unauthorized operations are made over the alteration inspection program on the information sending system by an insider of the information sending system or a person who has done cracking (unauthorized hacking) against the information sending system, that is, whether the alteration inspection program properly operates on the information sending system.

### D. Content-certification process for public information

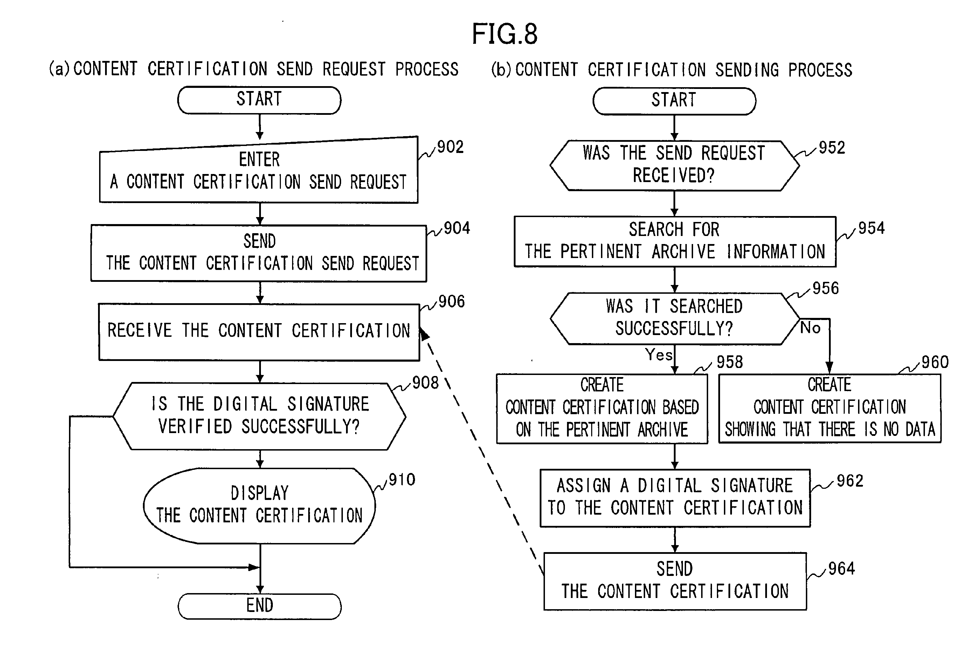

In Fig. 8, a flow (a) is chart illustrating a content-certification send request process executed by the content-certification send request processing module on the information sending system 120, and a flow chart (b) is illustrating a content-certification sending process executed by the content-certification sending processing module on the certification authority system 120 accordance with a request from the content-certification send request program.

When a user activates the content-certification send request program 171 A on the information sending system 110 and enters the URL of public information and the desired published day and time for content-certification (S902), the content-certification send request program 171A sends a content-certification send request including input information by the user to the certification authority system 120 (S904). More specifically, it requests the certification authority system 120 to send content-certification on the public information indicated by the 'URL' on the day and time shown by the 'published day and time'.

When the content-certification sending program 191 on the certification authority system 120 receives this send request (S952), and searches the public information archive 182 using the information included therein as a key (S954). More specifically, the content-certification sending program 191 searches for the file name 702 matched with the URL included in the send request and the archive information 700 including the publication start day and time 704 and the publication termination day and time 706 that have the published day and time included in the send request therebetween.

Consequently, when the pertinent archive information 700 exists (S956), the content-certification sending program 191 uses the information included in the archive information 700 and creates content-certification information (S958). For example, individual parameters T1, T2, T3, and U in a message showing that 'the public information having title U has existed in T1 (T2 to T3)' are substituted with the published day and time specified by the user at S902, the publication start day and time 704 in the archive information, the publication termination day and time 706 in the archive information, the URL specified by the user at S902. That message is added to the public information in the archive information, and thus content-certification information is created.

On the other hand, when the pertinent archive information 700 exists (S956), the content-certification sending program 191 creates content-certification information showing that certification items do not exist on the published day and time desired by the user (S960). For example, parameters T1 and U in a message showing that 'the public information having title U does not exist in T1' are substituted with the published day and time and the URL specified by the user at S902, and thus content-certification information is created.

When one of these two types of content-certification information is created, the content-certification sending program 191 creates a digital signature for the content-certification information with the private key 193 by the same process as that of the alteration inspection program 161 (S962), and returns to the content-certification information added with the digital signature to the information sending system 110 (S964).

After that, when the content-certification send request program 171A on the information sending system 110 receives the return data (S906), and verifies the digital signature of the return data with the public key 172A of the certification authority (S908).

Consequently, when the content-certification send request program 171A fails to verify the digital signature, it ends the process.

On the other hand, when the content-certification send request program 171A has verified the digital signature successfully, it outputs the plaintext of the return data (the content-certification information) from the output device. Accordingly, the user can refer to the content-certification information created at S960 or S958.

In addition, in the embodiment, the process is taken as an example that the content-certification send request program 171A on the information sending system 110 sends the send request for the content-certification data to the certification authority system 120. However, when the content-certification send request program 171B on the browser system 130 sends the send request for content-certification data to the certification authority system 120, the content-certification send request program 171 B on the browser system 130 executes the same process as that of the content-certification send request program 171 A on the information sending system 110.

## Claims

1. A system for checking disclosure of information on a network, the system comprising:
a storage device which stores a record including a public location of the information on the network, disclosure start time and disclosure termination time of the information on the network, and disclosed contents of the information on the network;
a communication control unit connected to the network, which receives a message including the public location of the pertinent information from the network when the information has been altered; and
a processing device which makes access to the public location of the information on the network based on the public location included in the message when the communication control unit has received the message,
wherein the communication control unit receives disclosed contents of the pertinent information from the network after altered in accordance with the access by the processing device, and
the processing device stores altered time of the pertinent information in a record for the pertinent information before altered in the storage device as disclosure termination time of the pertinent information before altered, and stores altered time of the pertinent information in a record for the information after altered in the storage device as disclosure start time of the pertinent information after altered along with disclosed contents of the information after altered.

2. The system according to claim 1, wherein the communication control unit receives altered time of the pertinent information from the network along with the disclosed contents of the information in accordance with the access by the processing device.

3. The system according to claim 1, wherein
when a plurality of information is disclosed on the network, the processing device randomly selects information to be checked from the plurality of the pertinent information, and makes access to the selected public location of the information based on the public location of the information in the storage device,
the communication control unit receives the disclosed contents of the information from the network in accordance with the access by the processing device, and
the processing device compares the disclosed contents of the information received by the communication control unit with the most current disclosed contents of the information stored in the storage device,
wherein the system further comprises an output device which outputs an alert message in accordance with the compared result by the processing device.

4. The system according to claim 1, wherein the public location is address information of a storage area that stores the information on the network.

5. The system according to claim 1 further comprising a timer, wherein after the communication control unit receives the message, the processing device determines altered time for the information based on the timer or time externally acquired.

6. The system according to claim 1, wherein when certification data that certifies validity of a sender of the message is added to the pertinent message, the processing device verifies the validity of the sender of the pertinent message based on the pertinent certification data.

7. The system according to claim 1, wherein
the storage device stores first certification data that certifies validity of a program for inspecting alteration in the information on the network beforehand;
the communication control unit receives a message including second certification data that certifies the validity of the program;
when the communication control unit has received a message including the second certification data, the processing device compares the first certification data with the pertinent second certification data, the processing device stores altered time of the pertinent information in a record for the pertinent information before altered in the storage device as disclosure termination time of the pertinent information before altered when the compared result confirms the validity of the program, and the processing device stores the altered time of the pertinent information in a record for the information after altered in the storage device as disclosure start time of the pertinent information after altered along with the disclosed contents of the information after altered.

8. A program product for checking disclosure of information on a network, the program product executed on a computer comprising:
storing a record including a public location of the information on the network, disclosure start time and disclosure termination time of the information on the network, and disclosed contents of the information on the network in a storage device;
receiving a message including a public location of the pertinent information from the network when the information has been altered;
making access to the public location of the information on the network based on the public location included in the message; and
receiving disclosed contents of the pertinent information after altered from the network in accordance with the access; and
storing altered time of the pertinent information in a record for the pertinent information before altered in the storage device as disclosure termination time of the pertinent information before altered, and storing the altered time of the pertinent information in a record for the information after altered in the storage device as disclosure start time of the pertinent information after altered along with disclosed contents of the information after altered.

9. A method for checking disclosure of information on a network, the method comprising:
storing a record including a public location of the information on the network, disclosure start time and disclosure termination time of the information on the network, and disclosed contents of the information on the network in a storage device;
receiving a message including a public location of the pertinent information from the network when the information has been altered;
making access to the public location of the information on the network based on the public location included in the message;
receiving disclosed contents of the pertinent information after altered from the network in accordance with the access; and
storing altered time of the pertinent information in a record for the pertinent information before altered in the storage device as disclosure termination time of the pertinent information before altered, and storing the altered time of the pertinent information in a record for the information after altered in the storage device as disclosure start time of the pertinent information after altered along with disclosed contents of the information after altered.

10. A system for disclosing information on a network, the system which sends the information to the network in accordance with a request from the network in order to certify disclosure of information on the network, the system comprising:
a communication control unit connected to the network;
a storage device including an area that stores disclosed contents of the information, the storage device which discloses contents of the information on the network; and
a processing device which inspects whether the disclosed contents of the information in the area have been altered, creates a message including a public location that identifies the area for the pertinent information when the disclosed contents of the information have been altered, and sends the message to the network,
wherein the communication control unit receives an access request for the public location included in the message through the network, and
when the communication control unit has received the access request, the processing device reads the information out of the area that is specified by the public location in the storage device, and sends the information read out to the network.

11. The system according to claim 10 further comprising an input device which receives input of the public location,
wherein the processing device creates a message including a public location received by the input device, and sends the message to the network,
the communication control unit receives the message including the public location from the network, and
when the communication control unit has received the message including the public location, the processing device makes access to the area specified by the pertinent public location in the storage device, and sends a message including the public location to the network when any one of events has been generated, the events that the information has been updated, the information has been deleted, and new information has been stored in the pertinent area.

12. The system according to claim 10, wherein the processing device adds certification data showing validity of a sender of the message to the message.

13. The system according to claim 10, wherein the processing device creates certification data that certifies validity of a program for inspecting that any one of events is generated, the events that the information has been updated, the information has been deleted, and new information has been stored in the pertinent area, creates a message including the pertinent certification data, and sends the message to the network.

14. The system according to claim 10, wherein the processing device inspects whether disclosed contents of the information in the area have been altered at a period within 24 hours.

15. A program product for disclosing information on a network, the program product which sends information to the network in accordance with a request from the network in order to certify disclosure of information on the network, the program product executed on a computer comprising:
disclosing contents of the information on the network;
inspecting whether disclosed contents of the information in an area have been altered;
creating a message including a public location that identifies an area for the pertinent information in a storage device when the disclosed contents of the information have been altered;
sending the message to the network;
receiving an access request for the public location included in the message through the network; and
reading the information out of the area specified by the public location in the storage device, and sending the information read out to the network when the access request has been received.

16. A method for disclosing information on a network, the method which sends information to the network in accordance with a request from the network in order to certify disclosure of information on the network, the method comprising:
disclosing contents of the information on the network;
inspecting whether the disclosed contents of the information in an area have been altered;
creating a message including a public location that identifies an area for the pertinent information in a storage device when the disclosed contents of the information have been altered;
sending the message to the network;
receiving an access request for the public location included in the message through the network; and
reading the information out of the area specified by the public location in the storage device, and sending the information read out to the network when the access request has been received.

17. A system for checking disclosure of information on a network, the system comprising:
a storage device which stores a record including a public location of the information on the network, disclosure start time and disclosure termination time of the information on the network, and disclosed contents of the information on the network;
a communication control unit connected to the network, which receives a message including disclosed contents of the pertinent information after altered from the network when the information has been altered; and
a processing device which stores altered time of the pertinent information in a record for the pertinent information before altered in the storage device as disclosure termination time of the pertinent information before altered, and stores the altered time of the pertinent information in a record for the information after altered in the storage device as disclosure of the pertinent information after altered along with disclosed contents of the information after altered, when the communication control unit has received the message.

18. A program product for checking disclosure of information on a network, the program product executed on a computer comprising:
storing a record including a public location of the information on the network, disclosure start time and disclosure termination time of the information on the network, and disclosed contents of the information on the network in a storage device;
receiving a message including disclosed contents of the pertinent information after altered from the network when the information has been altered; and
storing altered time of the pertinent information in a record for the pertinent information before altered in the storage device as disclosure termination time of the pertinent information before altered, and storing the altered time of the pertinent information in a record for the information after altered in the storage device as start disclosure time of the pertinent information after altered along with disclosed contents of the information after altered.

19. A method for checking disclosure of information on a network, the system comprising:
storing a record including a public location of the information on the network, disclosure start time and disclosure termination time of the information on the network, and disclosed contents of the information on the network in a storage device;
receiving a message including disclosed contents of the pertinent information after altered from the network when the information has been altered; and
storing altered time of the pertinent information in a record for the pertinent information before altered in the storage device as disclosure termination time of the pertinent information before altered, and storing the altered time of the pertinent information in a record for the information after altered in the storage device as start disclosure time of the pertinent information after altered along with disclosed contents of the information after altered.

20. A system for disclosing information on a network, the system which sends information to the network in accordance with a request from the network in order to certify disclosure of information on the network, the system comprising:
a communication control unit connected to the network;
a storage device including an area that stores disclosed contents of the information, the storage device which discloses contents of the information on the network; and
a processing device which inspects whether disclosure contents of information in the area have been altered, creates a message including disclosure contents of the pertinent information after altered when the disclosed contents of the information have been altered, and sends the message to the network.

21. A program product for disclosing information on a network, the program product which sends information to the network in accordance with a request from the network in order to certify disclosure of information on the network, the program product executed on a computer comprising:
disclosing contents of the information on the network;
inspecting whether disclosed contents of the information in an area haven been altered;
creating a message including disclosed contents of the pertinent information after altered when the disclosed contents of the information have been altered; and
sending the message to the network.

22. A method for disclosing information on a network, the method which sends information to the network in accordance with a request from the network in order to certify disclosure of information on the network, the method comprising:
disclosing contents of the information on the network;
inspecting whether the disclosed contents of the information in an area have been altered;
creating a message including disclosed contents of the pertinent information after altered when the disclosed contents of the information has been altered; and
sending the message to the network.
